# EUROPEAN PATENT APPLICATION

(11) **EP 4 756 223 A1**
(43) Date of publication of application: **10.06.2026**
(21) Application number: 24859499.6
(22) Date of filing: 16.08.2024
(51) Int. Cl.: F04B 49/10, F04B 25/00, F04B 41/06, F04B 49/06

(54) **COMPRESSOR UNIT AND METHOD FOR CONTROLLING COMPRESSOR UNIT**

(30) Priority: 28.08.2023 JP 2023138329
(71) Applicant: KABUSHIKI KAISHA KOBE SEIKO SHO (KOBE STEEL, LTD.), Hyogo 651-8585 (JP)
(72) Inventor: NAGURA, Kenji, Takasago-shi, Hyogo 676-8670 (JP)
(74) Representative: TBK
(86) International application number: PCT/JP2024/029220
(87) International publication number: WO 2025/047464

(57) **Abstract**

A compressor unit includes a first spillback unit that returns hydrogen gas discharged from an early compression stage to a suction flow path, an adjustment means that adjusts the processing amount of the hydrogen gas processed by a subsequent compression stage, a pressure sensor, an upstream side pressure sensor, and a controller. The controller can execute a first control and a second control, the first control being of controlling the adjustment means so as to adjust the processing amount in the subsequent compression stage based on the pressure acquired by the upstream side pressure sensor, and the second control being of controlling the first spillback valve so as to bring the intermediate pressure acquired by the pressure sensor within a predetermined pressure range.

## Description

### Technical Field

The present invention relates to a reciprocating compressor unit and a method for controlling the compressor unit.

### Background Art

In recent years, in consideration of environments, use of hydrogen as a fuel for power generation, automobiles, and the like is considered, and demand for hydrogen is increasing. Conventionally, low-temperature boil-off gas (BOG) of, for example, liquefied natural gas (LNG) and liquid hydrogen (LH2) is recovered by a compressor and supplied to a demand destination such as an engine. For example, Patent Literature 1 below discloses a reciprocating compressor for compressing hydrogen gas.

One major role required of a compressor for boil-off gas is to maintain the internal pressure of a liquefied gas storage tank constant. That is, the compressor is operated such that the compressor is started (or the processing amount in the compressor is increased) when the internal pressure of the tank has increased, and the compressor is stopped (or the processing amount in the compressor is decreased) when the internal pressure has decreased.

Therefore, when the compressor that processes boil-off gas is a reciprocating compressor, a processing amount controlling device such as a suction valve unloader or a clearance pocket for changing the processing amount is mounted in many cases.

Meanwhile, for a tank that accumulates liquid hydrogen (LH2) in particular, the temperature of boil-off gas generated from the tank is very low. For this reason, when a configuration in which the compressor directly suctions the boil-off gas is employed, it is needed to select a material suitable for cryogenic temperature or to employ a design condition considering the amount of thermal deformation. Accordingly, there are various restrictions such as requiring a strict heat insulation process to be applied also to a processing amount controlling device.

In addition, since the temperature of the gas suctioned by the first compression stage is near absolute zero, there is a characteristic of a volume greatly expanding by a slight temperature rise. Therefore, when a reciprocating compressor which is a displacement compressor suctions boil-off gas, an operation is performed under a large change in processing amount.

Patent Literature 1 below describes as follows. "The rod drive unit 48 of the unloader 38 provided to the intake valve 36 is disposed on the outer peripheral surface side of the housing 17. According to this configuration, the rod drive unit 48 is disposed outside the housing 17. The outside of the housing 17 is thermally insulated from the compression unit 2 by a vacuum area. Therefore, the unloader 38 can reliably operate without being thermally affected by the compression unit 2. Specifically, the unloader 38 receives compressed gas for driving the diaphragm. Examples of the compressed gas include compressed air and compressed nitrogen. According to the above configuration, since the unloader 38 is not thermally affected by the compression unit 2, the compressed air will not be liquefied. Thus, the unloader 38 can reliably operate" .

That is, since the rod drive unit of the unloader provided to the intake valve into which a cryogenic-temperature boil-off gas is introduced is configured to be driven by a compressed gas, it is suggested that thermal measures are necessary to avoid the rod drive unit being affected by cooling. In other words, it is suggested that the capacity of the boil-off gas suctioned into the compression unit cannot be appropriately adjusted unless thermal measures are appropriately carried out.

For a cryogenic gas such as boil-off gas of LH2, the temperature of the gas suctioned into the compressor is lower than about -180°C, so that the compressor described in Patent Literature 1 has a cylinder covered with a container forming a vacuum region to prevent liquefaction of air on the outer surface of the device. However, such a configuration is structurally complicated because a special measure for blocking cold entering the air drive unit of a capacity adjustment device such as the unloader is necessary. In addition, maintenance will be complicated.

### Citation List

### Patent Literature

Patent Literature 1: JP 2020-172870 A

### Summary of Invention

An object of the present invention is to make an early compression stage of a reciprocating compressor unit that compresses boil-off gas of cryogenic liquefied hydrogen respond to a pressure change of a gas suctioned into the early compression stage without adjustment means that is operated by a compressed gas.

A compressor unit according to one aspect of the present invention is a reciprocating compressor unit that recovers hydrogen gas that is boil-off gas from a liquid hydrogen storage tank and supplies at least a part of the hydrogen gas to a demand destination including at least one of an engine, a power generation facility, and a boiler, the compressor unit including one or two or more early compression stages that compress hydrogen gas having a predetermined temperature of 0°C or less and flowing in a suction flow path, one or two or more subsequent compression stages that further compress hydrogen gas discharged from the early compression stage, a crank mechanism that drives the early compression stage and the subsequent compression stage, a first spillback unit including a first spillback flow path and a first spillback valve, the first spillback flow path being for returning hydrogen gas after being discharged from the early compression stage to the suction flow path and the first spillback valve being for adjusting a spillback amount in the first spillback flow path, an adjustment means for adjusting a processing amount of hydrogen gas processed by the subsequent compression stage, a pressure sensor disposed on an intermediate flow path between the early compression stage and the subsequent compression stage, an upstream side pressure sensor disposed on the suction flow path, and a controller that controls each of the first spillback valve and the adjustment means. Each of the early compression stage and the subsequent compression stage includes a cylinder unit, a piston, a piston rod connecting the piston to the crank mechanism, and a rod packing that seals between the piston rod and the cylinder unit. The early compression stage is of an air cooled and oil free type. The controller is configured to be capable of executing a first control and a second control, the first control being of controlling the adjustment means so as to adjust the processing amount of the subsequent compression stage based on a pressure acquired by the upstream side pressure sensor, and the second control being of referring to an intermediate pressure acquired by the pressure sensor and controlling the first spillback valve so as to bring the intermediate pressure within a predetermined pressure range, the second control being executed before or after or simultaneously with the first control.

A method for controlling a compressor unit according to one aspect of the present invention is a method for controlling a reciprocating compressor unit, the method including recovering hydrogen gas that is boil-off gas from a liquid hydrogen storage tank, and supplying at least a part of the hydrogen gas to a demand destination that includes at least one of an engine, a power generation facility, and a boiler. The compressor unit includes one or two or more early compression stages that compress hydrogen gas having a predetermined temperature lower than 0°C and flowing in the suction flow path, one or two or more subsequent compression stages that further compress hydrogen gas discharged from the early compression stage, a crank mechanism that drives the early compression stage and the subsequent compression stage, a first spillback unit including a first spillback flow path and a first spillback valve, the first spillback flow path being for returning the hydrogen gas after being discharged from the early compression stage to the suction flow path and the first spillback valve being for adjusting the spillback amount in the first spillback flow path, an adjustment means for adjusting the processing amount of hydrogen gas processed by the subsequent compression stage, a pressure sensor disposed on the intermediate flow path between the early compression stage and the subsequent compression stage, and an upstream side pressure sensor disposed on the suction flow path. Each of the early compression stage and the subsequent compression stage includes a cylinder unit, a piston, a piston rod connecting the piston to the crank mechanism, and a rod packing that seals between the piston rod and the cylinder unit. The early compression stage is of an air cooled and oil free type. The method for controlling the compressor unit includes acquiring the pressure of hydrogen gas flowing in the suction flow path by the upstream side pressure sensor, acquiring the pressure of hydrogen gas flowing in the intermediate flow path by the pressure sensor, executing a first control of controlling the adjustment means so as to adjust the processing amount of the subsequent compression stage based on a pressure acquired by the upstream side pressure sensor, and executing a second control of referring to intermediate pressure acquired by the pressure sensor and controlling the first spillback valve before or after or simultaneously with the first control so as to bring the intermediate pressure within a predetermined pressure range.

### Brief Description of Drawings

FIG. 1 is a diagram schematically illustrating a compressor unit according to a first embodiment.
FIG. 2 is a diagram schematically illustrating an early compression stage in the compressor unit.
FIG. 3 is a diagram schematically illustrating a subsequent compression stage in the compressor unit.
FIG. 4 is a diagram for describing an operation of the compressor unit.
FIG. 5 is a diagram schematically illustrating the compressor unit according to a second embodiment.
FIG. 6 is a diagram for describing an operation of the compressor unit.
FIG. 7 is a diagram schematically illustrating the compressor unit according to a third embodiment.

### Description of Embodiments

Hereinafter, embodiments will be described with reference to the accompanying drawings. Note that the embodiment below is one example embodying the present invention, and is not intended to limit the technical scope of the present invention.

### (First Embodiment)

A compressor unit according to the present embodiment is configured to recover hydrogen gas, which is boil-off gas, from a liquid hydrogen storage tank, compress the recovered hydrogen gas, and supply the compressed hydrogen gas to a demand destination. The boil-off gas, which is hydrogen gas, is at about -253°C.

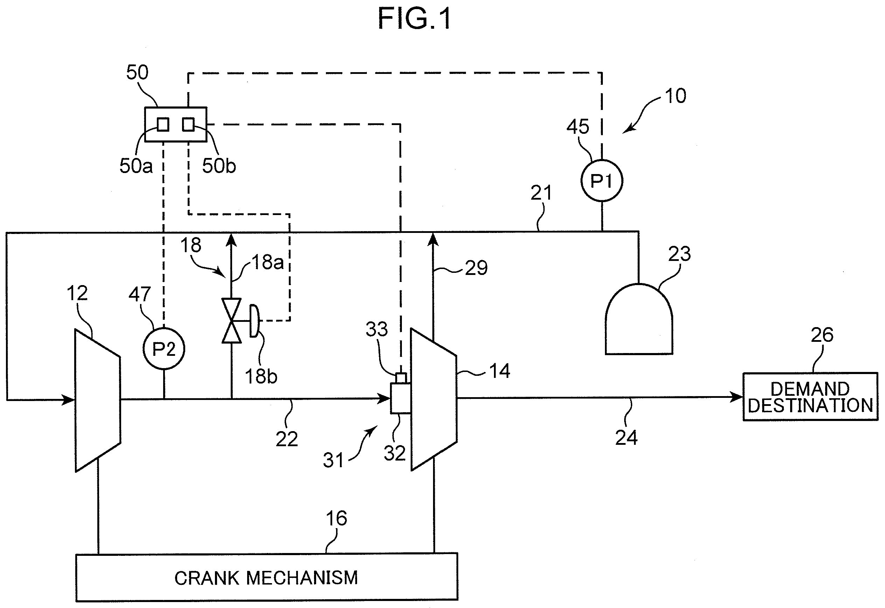

As illustrated in FIG. 1, a compressor unit 10 includes an early compression stage 12 that compresses hydrogen gas in a suction flow path 21, a subsequent compression stage 14 connected to the early compression stage 12 via an intermediate flow path 22, and a crank mechanism 16 that drives the early compression stage 12 and the subsequent compression stage 14.

The early compression stage 12 is connected to a liquid hydrogen storage tank 23 via the suction flow path 21. Therefore, the boil-off gas of liquefied gas occurred in the liquid hydrogen storage tank 23 is suctioned into the early compression stage 12 through the suction flow path 21. That is, hydrogen gas having a predetermined temperature or lower, that is, hydrogen gas having a reference temperature based on the liquefaction temperature of air or lower is introduced into the early compression stage 12 through the suction flow path 21. The "reference temperature" or "lower" may be, for example, -180°C or lower.

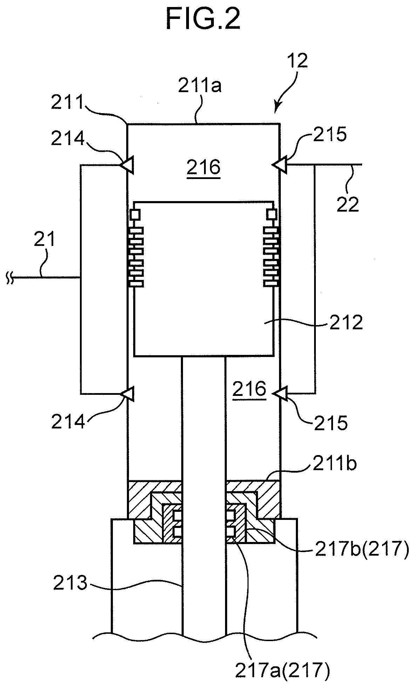

The early compression stage 12 includes a reciprocating compression mechanism. That is, as illustrated in FIG. 2, the early compression stage 12 includes a cylinder unit 211, a piston 212 disposed in the cylinder unit 211, a piston rod 213 connected to the piston 212, a pair of suction valves 214, and a pair of discharge valves 215. In the cylinder unit 211, a compression chamber 216 is formed between a front head 211a and the piston 212 and between a rear head 211b and the piston 212. The early compression stage 12 is of an air cooled type and is configured with an oil free compression mechanism that does not use lubricating oil.

The rear head 211b of the cylinder unit 211 is provided with a rod packing 217 for preventing leakage of hydrogen gas from the compression chamber 216. The rod packing 217 is configured to seal between the piston rod 213 and the cylinder unit 211, and includes a packing ring 217a disposed to surround the piston rod 213, and a case 217b that holds the packing ring 217a.

The piston 212 is connected to the crank mechanism 16 via the piston rod 213. By the piston 212 reciprocating in the cylinder unit 211, hydrogen gas is compressed in the compression chamber 216. Although FIG. 2 illustrates the early compression stage 12 having a double acting structure, the early compression stage 12 may employ a single acting structure having a compression chamber 216 only on the front head side or the rear head side.

Note that, in FIG. 1, the early compression stage 12 is indicated by a single trapezoid for convenience, but the early compression stage 12 may have a plurality of the cylinder units 211. That is, the early compression stage 12 may be configured such that hydrogen gas is compressed and pressurized by the pistons 212 in a plurality of the cylinder units 211 connected in parallel. The same applies to other embodiments. In addition, the early compression stage 12 may have a plurality of stages.

The subsequent compression stage 14 is a compression mechanism for further compressing the hydrogen gas discharged from the early compression stage 12. That is, hydrogen gas having a temperature higher than a predetermined temperature, that is, hydrogen gas having a temperature higher than a reference temperature based on the liquefaction temperature of air is introduced into the subsequent compression stage 14.

The hydrogen gas compressed by the subsequent compression stage 14 is discharged to a discharge flow path 24. The hydrogen gas flowing through the discharge flow path 24 is directly or indirectly via another facility sent to a demand destination 26. Examples of the demand destination 26 include a power generation facility, a boiler, an engine of a ship or the like, and may include a facility that releases the gas to the atmosphere, such as a flare facility or a vent.

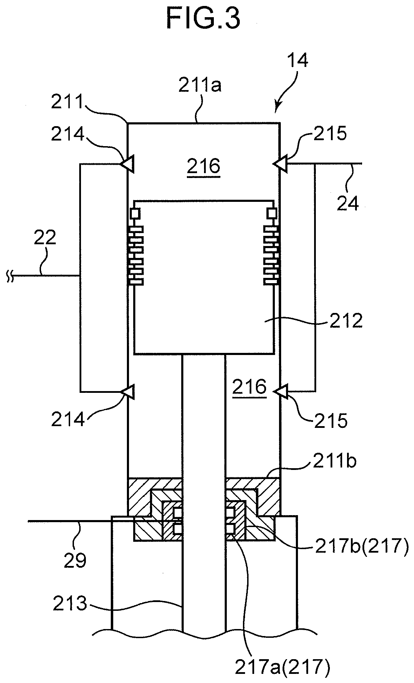

The subsequent compression stage 14 is configured with a reciprocating compression mechanism, similarly to the early compression stage 12, as illustrated in FIG. 3. The piston 212 of the subsequent compression stage 14 is also connected to the crank mechanism 16 via the piston rod 213. The subsequent compression stage 14 is configured similarly to the early compression stage 12, but the subsequent compression stage 14 is further provided with a leak gas discharge unit 29 that returns the leak gas from the rod packing 217 to the suction flow path 21. The leak gas discharge unit 29 may include a pipe member provided to connect the rod packing 217 and the suction flow path 21 to each other.

Note that FIG. 1 illustrates the subsequent compression stage 14 as a single trapezoid for convenience, but the subsequent compression stage 14 does not necessarily need to be a single stage and may include a compression mechanism of a plurality of compression stages. That is, the subsequent compression stage 14 may be configured such that hydrogen gas is sequentially compressed and pressurized by the piston 212 in each of a plurality of the cylinder units 211. The same applies to other embodiments. In the subsequent compression stage 14, a compression stage that discharges hydrogen gas of room temperature may be of either an oil free type or a lubricated type.

As illustrated in FIG. 1, the compressor unit 10 includes a first spillback unit 18 that returns a part of the hydrogen gas discharged from the early compression stage 12 to the suction flow path 21. The first spillback unit 18 includes a first spillback flow path 18a and a first spillback valve 18b including a valve having adjustable valve-opening and disposed on the first spillback flow path 18a. The first spillback flow path 18a includes one end portion connected to the intermediate flow path 22 and another end portion connected to the suction flow path 21. That is, the hydrogen gas that flows through the first spillback flow path 18a merges with the hydrogen gas from the liquid hydrogen storage tank 23 in the suction flow path 21. The first spillback valve 18b adjusts the spillback amount at the first spillback flow path 18a.

The compressor unit 10 includes an adjustment means 31 for adjusting the processing amount of hydrogen gas processed by the subsequent compression stage 14. The adjustment means 31 is provided on at least one subsequent compression stage 14. The adjustment means 31 adjusts the gas processing amount in the subsequent compression stage 14 by a method other than adjustment of the rotation speed of the crank mechanism 16. In the present embodiment, the adjustment means 31 includes a suction valve unloader 32 and a drive device 33.

The suction valve unloader 32 is attached to the suction valve 214 of the subsequent compression stage 14 (see FIG. 3), and is driven by the drive device 33 to be on and off. When the suction valve unloader 32 is operated, a valve plate of the suction valve 214 is maintained in an open state, whereby the suction valve 214 cannot function as a check valve (unload). Note that, when the piston 212 is in a suction stroke while the unloader 32 is not operating, the pressure in the compression chamber 216 becomes lower than the pressure in the intermediate flow path 22, whereby the suction valve 214 enters the open state. As a result, hydrogen gas is introduced from the intermediate flow path 22 into the compression chamber 216. Then, when the piston 212 is in a compression stroke, the pressure in the compression chamber 216 becomes higher than the pressure in the intermediate flow path 22, whereby the suction valve 214 enters a closed state.

The suction valve unloader 32 is attached to each of the compression chamber 216 in the front head side and the compression chamber 216 in the rear head side of the cylinder unit 211, and the suction valve unloaders 32 can be operated independently of each other. A state in which both the suction valve unloaders 32 are not operating is referred to as 100% load, and a state in which either one is operating is referred to as 50% load.

The suction valve unloader 32 is driven by the drive device 33 using a compressed gas such as air and nitrogen. The suction valve unloader 32 is driven by the drive device 33 to bring the suction valve 214 into a state in which the compression chamber 216 is opened to or closed from the intermediate flow path 22 depending on to a differential pressure between the compression chamber 216 and the intermediate flow path 22 (load state), or into a state in which the compression chamber 216 is maintained to be opened to the intermediate flow path 22 (unload). For example, when the pressure of a gas such as air and nitrogen is not applied to the drive device 33, the suction valve unloader 32 brings the suction valve 214 into a free state such that the compression chamber 216 can be opened or closed depending on the pressure difference between the compression chamber 216 and the intermediate flow path 22. Meanwhile, when the pressure of a gas such as air and nitrogen is applied to the drive device 33, the suction valve unloader 32 forcibly maintains the suction valve 214 in the open state despite the pressure difference between the compression chamber 216 and the intermediate flow path 22 normally closing the compression chamber 216.

The drive device 33 may have a structure having a spring for creating driving force and using the pressure of a gas such as air and nitrogen to cancel the spring force. In this configuration, the suction valve can be forcibly maintained in the open state by not applying the pressure of the gas to the drive device 33. Meanwhile, applying the pressure of the gas to the drive device 33 may cause an effect opposite to the effect of causing the suction valve to enter the free state.

The suction flow path 21 is provided with an upstream side pressure sensor 45 that detects the pressure of the hydrogen gas in the suction flow path 21. The upstream side pressure sensor 45 is disposed at a portion of the suction flow path 21 further on the upstream side than a connection of the first spillback flow path 18a. Note that the upstream side pressure sensor 45 may be disposed at a portion of the suction flow path 21 further on the downstream side than the connection of the first spillback flow path 18a.

The intermediate flow path 22 is provided with a pressure sensor 47 that detects the pressure of the hydrogen gas in the intermediate flow path 22. In the intermediate flow path 22, the pressure sensor 47 is located between the early compression stage 12 and a connection of the first spillback flow path 18a. Note that since the pressure sensor 47 is for detecting the pressure of the hydrogen gas in the intermediate flow path 22, the pressure sensor 47 may be located between the connection of the first spillback flow path 18a and the subsequent compression stage 14. Further, the pressure sensor 47 may be provided at a portion of the first spillback flow path 18a further on the upstream side than the first spillback valve 18b.

The upstream side pressure sensor 45 and the pressure sensor 47 output a signal indicating a detected pressure. Signals from the pressure sensor 47 and the upstream side pressure sensor 45 are input to the controller 50.

The controller 50 is a computer that controls various operations of the compressor unit 10, and functions of the controller 50 executed by the computer include a first controller 50a which is a functional unit for executing a first control and a second controller 50b which is a functional unit for executing a second control.

In the first control, the adjustment means 31 is controlled based on pressure P1 acquired by the upstream side pressure sensor 45. That is, the first controller 50a refers to the pressure (hydrogen gas pressure in the suction flow path 21) P1 acquired by the upstream side pressure sensor 45, and controls the drive device 33 of the suction valve unloader 32 based on the pressure P1.

In the second control, the first spillback valve 18b is controlled based on pressure P2 acquired by the pressure sensor 47. That is, the second controller 50b refers to the pressure (intermediate pressure that is the hydrogen gas pressure in the intermediate flow path 22) P2 acquired by the pressure sensor 47, and controls the first spillback valve 18b based on the intermediate pressure P2.

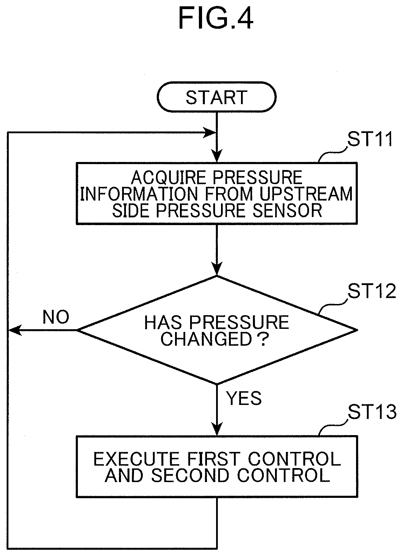

Here, an operation of the compressor unit 10 according to the present embodiment will be described with reference to FIG. 4.

In the early compression stage 12 and the subsequent compression stage 14, the pistons 212 reciprocate in the cylinder units 211 by an operation of the crank mechanism 16. As a result, the hydrogen gas in the suction flow path 21 is suctioned into the early compression stage 12, the hydrogen gas in the intermediate flow path 22 is suctioned into the subsequent compression stage 14, and the hydrogen gas is compressed.

During the operations of the compression stages 12 and 14, the pressure information of the hydrogen gas suctioned into the early compression stage 12 is acquired by the upstream side pressure sensor 45 (step ST11). Then, the controller 50 compares the pressure P1 indicated by the pressure information acquired from the upstream side pressure sensor 45 with a reference range stored in advance, and determines whether the pressure of the hydrogen gas in the suction flow path 21 has changed and gone out of the reference range (step ST12). When it is determined that the pressure P1 of the hydrogen gas is within the reference range and has not changed, the process returns to step ST11, and step ST11 is executed again.

Meanwhile, when it is determined that the detected pressure P1 of the hydrogen gas in the suction flow path 21 has changed to go out of the reference range (YES in step ST12), the first control and the second control are executed (step ST13).

Specifically, the first controller 50a refers to the pressure P1 acquired by the upstream side pressure sensor 45, and when it determines that the pressure P1 has decreased to be lower than the predetermined reference range, the load of the subsequent compression stage 14 is lowered by the suction valve unloader 32 (for example, lowered from 100% load to 50% load). As a result, the processing amount of the hydrogen gas in the subsequent compression stage 14 is decreased. Meanwhile, when it is determined that the acquired pressure P1 has increased to be higher than the predetermined reference range, the load of the subsequent compression stage 14 is increased by the suction valve unloader 32 (for example, increased from 50% load to 100% load). As a result, the processing amount of the hydrogen gas in the subsequent compression stage 14 increases.

The controller 50 continues acquiring the pressure information from the pressure sensor 47 since before the execution of the first control. Therefore, the controller 50 is receiving the pressure information acquired by the pressure sensor 47 also during the first control and after the first control has stopped.

The second controller 50b executes the second control before or after the first control (that is, prior to or subsequent to the first control) or simultaneously with the first control. In the first control, when the suction valve unloader 32 is operated, the processing amount of the hydrogen gas in the subsequent compression stage 14 changes. Therefore, the pressure (intermediate pressure) P2 acquired by the pressure sensor 47 also changes accordingly. When the intermediate pressure P2 changes, the second controller 50b in response changes the valve-opening of the first spillback valve 18b.

For example, when the suction valve unloader 32 is operated and the processing amount in the subsequent compression stage 14 decreases, the intermediate pressure P2 will increase in response. In this case, the second controller 50b controls the first spillback valve 18b so that the valve-opening thereof increases by a predetermined valve-opening. Meanwhile, when the processing amount in the subsequent compression stage 14 increases, the intermediate pressure P2 will decrease in response. In this case, the second controller 50b controls the first spillback valve 18b so that the valve-opening thereof decreases by a predetermined valve-opening. As a result, a pressure change of the hydrogen gas in the intermediate flow path 22 due to a pressure change of the hydrogen gas from the liquid hydrogen storage tank 23 can be suppressed. In addition, an excessive compressive operation in the subsequent compression stage 14 can be suppressed.

As described above, in the compressor unit 10 of the present embodiment, the spillback amount is adjusted in the early compression stage 12 by the first spillback unit 18 based on the intermediate pressure P2. Therefore, with no adjustment means that operates by compressed gas provided to the early compression stage 12, the compressor unit 10 can be configured to respond to a pressure change of the suction gas.

In general, to adjust the capacity of a reciprocating compressor, a suction valve unloader that operates by air pressure is provided to a cylinder unit of each compression stage. Further, a clearance pocket may be additionally provided. In the case of a general cylinder unit that performs compression in both the compression stroke and the suction stroke, the capacity can be adjusted to 100%, 50%, and 0% by a suction valve unloader, and with an additional clearance pocket, the capacity can also be adjusted to 75% and 25%. According to such a general method, capacity adjustment devices are attached to the cylinder units of all the compression stages depending on the requirement from a liquid hydrogen storage tank for capacity adjustment. In the case of a multi-stage reciprocating compressor, usually, the gas processed in the first compression stage is entirely processed in the second compression stage, and the gas processed in the second compression stage is (when there is the third or more stages, after having been further processed) entirely delivered to a discharge flow path. Therefore, to reduce the suction amount from the liquid hydrogen storage tank to the compressor unit, the suction amount to the cylinder unit of the first compression stage is reduced by a suction valve unloader, and accordingly, the suction amount is similarly reduced by a suction valve unloader for the second and further compression stages.

However, when the suction valve unloader that operates by compressed air is provided to the cylinder unit of the first compression stage, thermal measures by the cryogenic hydrogen gas from the liquid hydrogen storage tank are required. When thermal measures are not appropriately carried out, an appropriate respond to a pressure change in the liquid hydrogen storage tank cannot be made.

In contrast, in the compressor unit 10 according to the present embodiment, the processing amount in the early compression stage 12 is adjusted by the first spillback unit 18, so that it can respond to the pressure change of the suction gas with no suction valve unloader that is operated by compressed gas provided to the early compression stage 12. That is, the early compression stage 12 that compresses boil-off gas of cryogenic liquefied hydrogen is not provided with a drive unit that operates by compressed gas, but is provided with the first spillback unit 18 that adjusts the spillback amount of the gas discharged from the early compression stage 12. Therefore, in combination with the adjustment of the processing amount by the adjustment means 31 in the subsequent compression stage 14, the compressor unit 10 can respond to the pressure change of suction gas. Further, hydrogen gas can be recovered stably.

### (Second Embodiment)

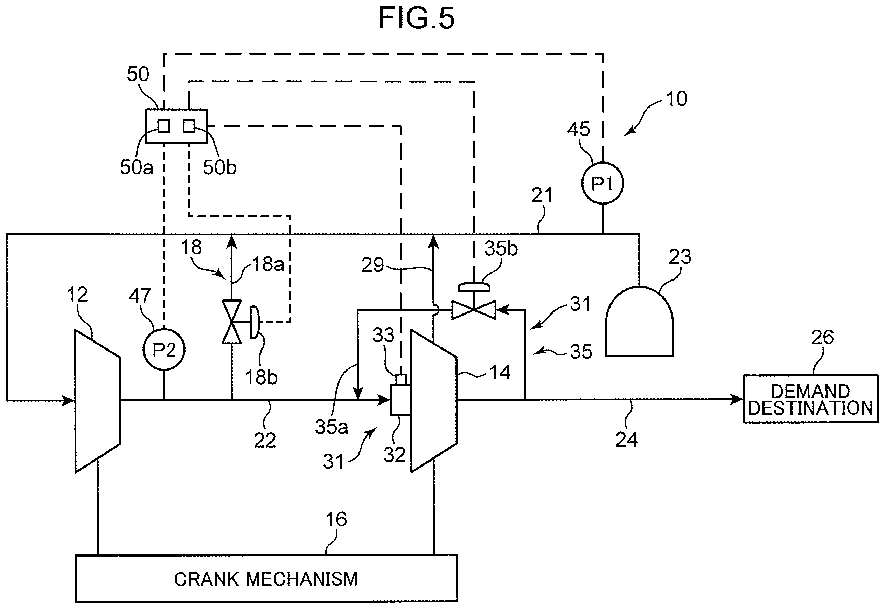

In a second embodiment, as illustrated in FIG. 5, a second spillback unit 35 is added in the adjustment means 31. That is, the adjustment means 31 includes a suction valve unloader 32 and the second spillback unit 35. Note that, here, the same constituent elements as those of the first embodiment are denoted by the same reference numerals, and detailed description thereof will be omitted.

The second spillback unit 35 includes a second spillback flow path 35a and a second spillback valve 35b which is a valve having adjustable valve-opening and disposed on a second spillback flow path 35a. The second spillback flow path 35a includes one end portion connected to the discharge flow path 24 and another end portion connected to the intermediate flow path 22. Therefore, by opening the second spillback valve 35b, a part of hydrogen gas discharged from the subsequent compression stage 14 is returned to the intermediate flow path 22. The second spillback valve 35b adjusts the spillback amount in the second spillback flow path 35a. The second spillback unit 35 performs processing of returning a part of hydrogen gas discharged from the subsequent compression stage 14 to the intermediate flow path 22. The flow rate of the hydrogen gas sent from the subsequent compression stage 14 to a demand destination 26 is thereby adjusted.

The suction valve unloader 32 adjusts the flow rate of the hydrogen gas suctioned into the compression chamber 216 to adjust the processing amount of the hydrogen gas processed in the subsequent compression stage 14. As described above, in a compressor unit 10, the suction valve unloader 32 and the second spillback unit 35 are controlled to adjust the processing amount of the hydrogen gas processed in the subsequent compression stage 14.

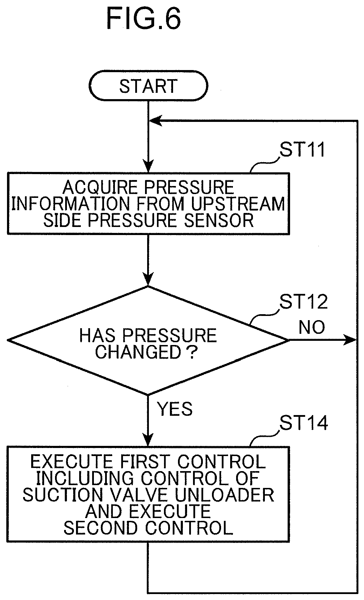

When the compressor unit 10 is driven, in the first control. as illustrated in FIG. 6, the first controller 50a refers to pressure P1 (hydrogen gas pressure in the suction flow path 21) acquired by the upstream side pressure sensor 45 (step ST11). When it is determined that the acquired pressure P1 has decreased to be lower than a predetermined reference range (YES in step ST12), the first control including control of the suction valve unloader 32 and the second control are performed (step ST14).

In the first control, the second spillback valve 35b is controlled so that the valve-opening of the second spillback valve 35b increases by a predetermined valve-opening.

The second control is performed before or after or simultaneously with the first control. In the second control, the second controller 50b controls the first spillback valve 18b so that the valve-opening increases by a predetermined valve-opening based on pressure (intermediate pressure) P2 acquired by the pressure sensor 47. As a result, an increase in the pressure of the hydrogen gas in the intermediate flow path 22 due to an increase in the valve-opening of the second spillback valve 35b is suppressed.

Thereafter, when the valve-opening of the second spillback valve 35b exceeds a threshold value, the first controller 50a further performs the following operation as the first control. That is, the first controller 50a lowers the load of the subsequent compression stage 14 by the suction valve unloader 32 (for example, lowers from 100% load to 50% load). As a result, the processing amount of the hydrogen gas in the subsequent compression stage 14 is decreased. At the same time, the first controller 50a controls the second spillback valve 35b so that the valve-opening of the second spillback valve 35b becomes minimum. As a result, an excessive compressive operation in the subsequent compression stage 14 can be suppressed.

Meanwhile, when it is determined that the acquired pressure P1 has increased to be higher than a predetermined reference range (YES in step ST12), the first control and the second control are performed (step ST14).

In the first control, the second spillback valve 35b is controlled so that the valve-opening thereof decreases by a predetermined valve-opening.

In the second control, the second controller 50b controls the first spillback valve 18b so that the valve-opening decreases by a predetermined valve-opening based on the pressure (intermediate pressure) P2 according to the pressure sensor 47. As a result, the decrease in the pressure of hydrogen gas in the intermediate flow path 22 due to the decrease in the valve-opening of the second spillback valve 35b is suppressed.

Thereafter, when the valve-opening of the second spillback valve 35b is at a minimum value and the load of the subsequent compression stage 14 is 50% load, the first controller 50a further performs the following operation as the first control. That is, the first controller 50a increases the load of the subsequent compression stage 14 by the suction valve unloader 32 (for example, increases from 50% load to 100% load). As a result, the processing amount of the hydrogen gas in the subsequent compression stage 14 increases. At the same time, the first controller 50a controls the second spillback valve 35b so that the valve-opening thereof reaches the threshold value.

As described above, in the compressor unit 10, the pressure change of the hydrogen gas in the intermediate flow path 22 due to the pressure change of the hydrogen gas from the liquid hydrogen storage tank 23 can be more finely suppressed by executing the first control and the second control.

In the present embodiment, the adjustment means 31 includes the suction valve unloader 32 and the second spillback unit 35, but the suction valve unloader 32 may be omitted. That is, the adjustment means 31 may be configured only with the second spillback unit 35. In this case, the step of controlling the suction valve unloader 32 is omitted. Although other configurations, operations, and effects are not described, the description of the first embodiment can be applied to the second embodiment.

### (Third Embodiment)

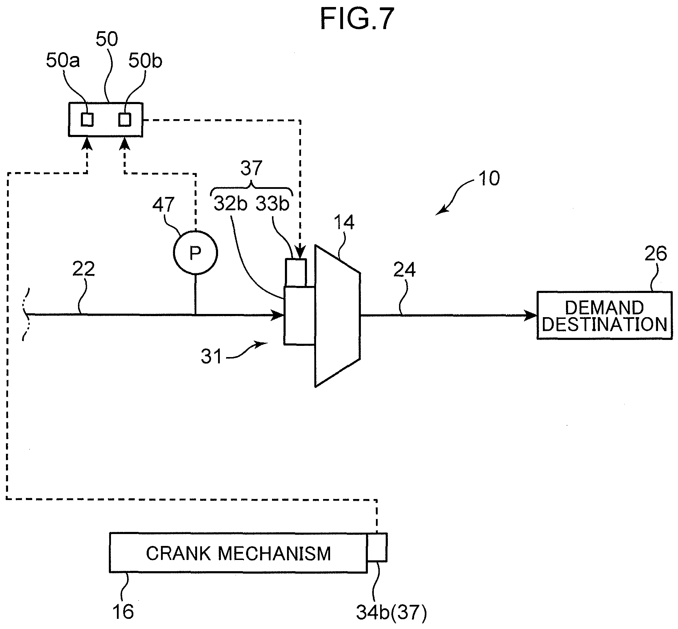

As illustrated in FIG. 7, in a third embodiment, an adjustment means 31 includes a stepless capacity adjustment device 37. Note that the adjustment means 31 does not include a second spillback unit 35. Here, the same components as those of the first and second embodiments are denoted with the same reference numerals, and detailed description thereof will be omitted.

The stepless capacity adjustment device 37 includes a suction valve unloader 32b, a hydraulic or electric drive device 33b, and a detector 34b that detects rotation of a crankshaft of a crank mechanism 16. The suction valve unloader 32b is driven by the hydraulic or electric drive device 33b, and can maintain or cancel the open state of a valve plate of a suction valve 214 within a time shorter than the time in which a piston 212 reciprocates. Further, a controller 50 performs computational processing to estimate the position of the piston 212 based on a signal transmitted from the detector 34b installed in the crank mechanism 16.

The suction valve 214 (see FIG. 3) attached to the cylinder unit 211 of the subsequent compression stage 14 includes a valve plate that opens and closes the intermediate flow path 22 and a valve body that houses the valve plate. Like a check valve, the suction valve 214 has a structure in which when the upstream pressure is higher than the downstream pressure, the valve plate enters the open state by the differential pressure, and when the downstream pressure is higher, gas does not flow.

When the suction valve unloader 32b is operated, the valve plate of the suction valve 214 is maintained in the open state in which the suction valve 214 does not function as a check valve. Note that, when the piston 212 is in a suction stroke with the unloader 32b not operating and the pressure of a compression chamber 216 decreases to be lower than the pressure of the intermediate flow path 22, which is a path on the suction side, the suction valve 214 enters the open state. As a result, gas is introduced into the compression chamber 216. When the piston 212 is in a compression stroke, the pressure of the compression chamber 216 increases to be higher than the pressure of the intermediate flow path 22, and the suction valve 214 enters the closed state.

In a first control, a first controller 50a of the controller 50 refers to pressure P1 acquired by the upstream side pressure sensor 45, and controls the drive device 33b that operates the suction valve unloader 32b when the pressure P1 goes out of a predetermined reference range or when the pressure P1 changes to a preset value or more.

When a change in the pressure P1 is detected, the first controller 50a controls the drive device 33b so as to adjust the timing of operation of the suction valve unloader 32b in conjunction with the rotational motion of the crankshaft of the crank mechanism 16. Specifically, at the beginning of the compression stroke, the first controller 50a operates the suction valve unloader 32b to maintain the open state of the suction valve 214. As a result, a part of the gas in the compression chamber 216 is returned to the intermediate flow path 22. Then, in the middle of the compression stroke, the first controller 50a controls the drive device 33 so as to cancel the operation of the suction valve unloader 32b. As a result, the open state of the suction valve 214 is cancelled to close the suction valve 214. At that time, the gas remaining in the compression chamber 216 is compressed and sent out from the compression chamber 216 to the discharge flow path 24. Next, in the suction stroke, the first controller 50a controls the drive device 33b so as to operate the suction valve unloader 32b again, and controls the drive device 33b so as to cancel the open state after the compression stroke of the piston 212 starts. The suction valve unloader 32b is repetitively operated and cancelled as described above along with the reciprocating motion of the piston 212.

When cancelling of the suction valve unloader 32b is made at an earlier timing, an amount sent out to the discharge flow path 24 increases, and when made at a later timing, an amount sent out to the discharge flow path 24 decreases, which means that the suction valve unloader 32b can carry out the same function as the second spillback unit 35. That is, the processing amount of the subsequent compression stage 14 can be adjusted in response to the change in the pressure in the intermediate flow path 22 resulting from the first control, and thus the power can further be reduced.

Although other configurations, operations, and effects are not described, the description of the first and second embodiments can be applied to the third embodiment.

### (Other Embodiments)

It should be understood that the embodiments disclosed herein are illustrative in all respects and are not restrictive. The present invention is not limited to the above embodiments, and various changes, improvements, and the like can be made without departing from the gist of the present invention.

For example, when two or more subsequent compression stages 14 are provided in the first embodiment and the third embodiment, the suction valve unloaders 32 and 32b are provided to at least one subsequent compression stage 14.

In the first embodiment, a clearance pocket may be provided, as the adjustment means 31, instead of the suction valve unloader 32.

When two or more subsequent compression stages 14 are provided in the second embodiment, the suction valve unloader 32 and the second spillback unit 35 are provided to at least one subsequent compression stage 14. Further, the second spillback unit 35 may be configured such that the second spillback flow path 35a bypasses a plurality of subsequent compression stages 14.

In the above embodiments, when two or more early compression stages 12 are provided, the first spillback unit 18 may be configured such that one end portion of the first spillback flow path 18a is connected to a flow path between the early compression stages 12 adjacent to each other, and another end portion is connected to the suction flow path 21. Two or more first spillback units 18 may be provided.

The embodiments will be outlined below.
(1) A compressor unit according to the embodiment is a reciprocating compressor unit that recovers hydrogen gas that is boil-off gas from a liquid hydrogen storage tank and supplies at least a part of the hydrogen gas to a demand destination including at least one of an engine, a power generation facility, and a boiler, the compressor unit including one or two or more early compression stages that compress hydrogen gas having a predetermined temperature below 0°C and flowing in a suction flow path, one or two or more subsequent compression stages that further compress hydrogen gas discharged from the early compression stage, a crank mechanism that drives the early compression stage and the subsequent compression stage, a first spillback unit including a first spillback flow path and a first spillback valve, the first spillback flow path being for returning hydrogen gas after being discharged from the early compression stage to the suction flow path and the first spillback valve being for adjusting a spillback amount in the first spillback flow path, an adjustment means for adjusting a processing amount of hydrogen gas processed by the subsequent compression stage, a pressure sensor disposed on an intermediate flow path between the early compression stage and the subsequent compression stage, an upstream side pressure sensor disposed on the suction flow path, and a controller that controls each of the first spillback valve and the adjustment means. Each of the early compression stage and the subsequent compression stage includes a cylinder unit, a piston, a piston rod connecting the piston to the crank mechanism, and a rod packing that seals between the piston rod and the cylinder unit. The early compression stage is of an air cooled and oil free type. The controller is configured to be capable of executing a first control and a second control, the first control being of controlling the adjustment means so as to adjust the processing amount of the subsequent compression stage based on a pressure acquired by the upstream side pressure sensor, and the second control being of referring to intermediate pressure acquired by the pressure sensor and controlling the first spillback valve so as to bring the intermediate pressure within a predetermined pressure range, the second control being executed before or after or simultaneously with the first control.
   In the compressor unit, the spillback amount is adjusted in the early compression stage by the first spillback unit based on the intermediate pressure. Therefore, without providing an adjustment means that operates by compressed gas to the early compression stage, the compressor unit can be configured to respond to a pressure change of the suction gas. That is, the early compression stage that compresses the boil-off gas of cryogenic liquefied hydrogen is not provided with a drive unit that operates by compressed gas, but is provided with the first spillback unit, so that with adjustment of the processing amount of the gas in the subsequent compression stage made by the adjustment means, the compressor unit can respond to a pressure change of the suction gas. That is, the adjustment of the gas processing amount in the subsequent compression stage is performed based on the pressure acquired by the upstream side pressure sensor, and moreover, the spillback amount of the first spillback unit is adjusted based on the intermediate pressure that may change by the adjustment of the gas processing amount in the subsequent compression stage. Accordingly, the compressor unit can respond to a pressure change of the suction gas.
(2) At least one subsequent compression stage among the one or two or more subsequent compression stages may have a leak gas discharge unit that returns leak gas from the rod packing to the suction flow path. In this aspect, the leak gas can be recovered.
(3) The adjustment means may include, in at least one subsequent compression stage among the one or two or more subsequent compression stages, a suction valve unloader attached to a cylinder unit of the subsequent compression stage. In this case, in the first control, the controller may be configured to control the suction valve unloader based on the pressure acquired by the upstream side pressure sensor so as to adjust the processing amount of the cylinder unit.
   In this aspect, the power for compressing gas can be further reduced.
(4) The adjustment means may include, in at least one subsequent compression stage among the one or two or more subsequent compression stages, a second spillback unit including a second spillback flow path and a second spillback valve, the second spillback flow path being for returning the hydrogen gas flowing on a discharge side of the subsequent compression stage to a suction side of the subsequent compression stage, and the second spillback valve being for adjusting the spillback amount in the second spillback flow path, and a suction valve unloader attached to a cylinder unit of the subsequent compression stage. In this case, in the first control, the controller may be configured to control the second spillback valve and the suction valve unloader based on the pressure acquired by the upstream side pressure sensor so as to adjust a processing amount of the cylinder unit.
   In this aspect, the power for compressing gas can be further reduced.
(5) The adjustment means may include, in at least one subsequent compression stage among the one or two or more subsequent compression stages, a stepless capacity adjustment device having a suction valve unloader and a hydraulic or electric drive device, the suction valve unloader being attached to a cylinder unit of the subsequent compression stage, and the hydraulic or electric drive device opening and closing the suction valve unloader. In this case, the controller may drive the drive device so as to adjust a timing of operation of the suction valve unloader in conjunction with the rotational motion of a crankshaft in the crank mechanism. In the first control. the controller may be configured to control the drive device based on a pressure acquired by the upstream side pressure sensor so as to adjust a processing amount of the subsequent compression stage.
   In this aspect, the timing of operation and the operation time of the suction valve unloader are controlled, and a part of hydrogen gas in the cylinder unit is returned to the suction side. Therefore, the gas processing amount of the subsequent compression stage can be reduced, and accordingly, the power can be further reduced.
(6) A method for controlling a compressor unit according to the embodiment is a method for controlling a reciprocating compressor unit that recovers hydrogen gas that is boil-off gas from a liquid hydrogen storage tank and supplies at least a part of the hydrogen gas to a demand destination that includes at least one of an engine, a power generation facility, and a boiler. The compressor unit includes one or two or more early compression stages that compress hydrogen gas having a predetermined temperature lower than 0°C and flowing in the suction flow path, one or two or more subsequent compression stages that further compress hydrogen gas discharged from the early compression stage, a crank mechanism that drives the early compression stage and the subsequent compression stage, a first spillback unit including a first spillback flow path and a first spillback valve, the first spillback flow path being for returning the hydrogen gas after being discharged from the early compression stage to the suction flow path and the first spillback valve being for adjusting the spillback amount in the first spillback flow path, an adjustment means for adjusting a processing amount of hydrogen gas processed by the subsequent compression stage, a pressure sensor disposed on an intermediate flow path between the early compression stage and the subsequent compression stage, and an upstream side pressure sensor disposed on the suction flow path. Each of the early compression stage and the subsequent compression stage includes a cylinder unit, a piston, a piston rod connecting the piston to the crank mechanism, and a rod packing that seals between the piston rod and the cylinder unit. The early compression stage is of an air cooled and oil free type. The method for controlling the compressor unit includes acquiring a pressure of hydrogen gas flowing in the suction flow path by the upstream side pressure sensor, acquiring a pressure of hydrogen gas flowing in the intermediate flow path by the pressure sensor, executing a first control of controlling the adjustment means so as to adjust a processing amount of the subsequent compression stage based on pressure acquired by the upstream side pressure sensor, and executing a second control of referring to an intermediate pressure acquired by the pressure sensor and controlling the first spillback valve before or after or simultaneously with the first control so as to bring the intermediate pressure within a predetermined pressure range.

As described above, a reciprocating compressor unit that compresses boil-off gas of cryogenic liquefied hydrogen can respond to a pressure change of a gas suctioned into an early compression stage with no adjustment means that is operated by a compressed gas provided to the early compression stage.

This application is based on Japanese Patent Application No. 2023-138329 filed on August 28, 2023, the contents of which are incorporated herein by reference.

## Claims

1. A compressor unit that is a reciprocating compressor unit that recovers hydrogen gas, that is boil-off gas from a liquid hydrogen storage tank, and supplies at least a part of the hydrogen gas to a demand destination including at least one of an engine, a power generation facility, and a boiler, the compressor unit comprising:
one or two or more early compression stages that compress hydrogen gas having a predetermined temperature below 0°C and flowing in a suction flow path;
one or two or more subsequent compression stages that further compress hydrogen gas discharged from the early compression stage;
a crank mechanism that drives the early compression stage and the subsequent compression stage;
a first spillback unit including a first spillback flow path and a first spillback valve, the first spillback flow path being for returning hydrogen gas after been discharged from the early compression stage to the suction flow path, and the first spillback valve being for adjusting a spillback amount in the first spillback flow path;
an adjustment means for adjusting a processing amount of hydrogen gas processed by the subsequent compression stage;
a pressure sensor disposed on an intermediate flow path between the early compression stage and the subsequent compression stage;
an upstream side pressure sensor disposed on the suction flow path; and
a controller that controls each of the first spillback valve and the adjustment means,
wherein each of the early compression stage and the subsequent compression stage includes
a cylinder unit,
a piston,
a piston rod connecting the piston to the crank mechanism, and
a rod packing that seals between the piston rod and the cylinder unit,
the early compression stage is of an air cooled and oil free type, and
the controller is capable of executing
a first control of controlling the adjustment means so as to adjust a processing amount of the subsequent compression stage based on a pressure acquired by the upstream side pressure sensor, and
a second control of referring to an intermediate pressure acquired by the pressure sensor and controlling the first spillback valve so as to bring the intermediate pressure within a predetermined pressure range, the second control being executed before or after or simultaneously with the first control.

2. The compressor unit according to claim 1, wherein at least one subsequent compression stage among the one or two or more subsequent compression stages has a leak gas discharge unit that returns leak gas from the rod packing to the suction flow path.

3. The compressor unit according to claim 1 or 2, wherein
the adjustment means includes, in at least one subsequent compression stage among the one or two or more subsequent compression stages, a suction valve unloader attached to a cylinder unit of the subsequent compression stage, and
the controller controls, in the first control, the suction valve unloader based on the pressure acquired by the upstream side pressure sensor so as to adjust a processing amount of the cylinder unit.

4. The compressor unit according to claim 1 or 2, wherein
the adjustment means includes, in at least one subsequent compression stage among the one or two or more subsequent compression stages,
a second spillback unit including a second spillback flow path and a second spillback valve, the second spillback flow path being for returning hydrogen gas flowing on a discharge side of the subsequent compression stage to a suction side of the subsequent compression stage, and the second spillback valve being for adjusting a spillback amount in the second spillback flow path, and
a suction valve unloader attached to a cylinder unit of the subsequent compression stage, and
the controller is configured to control, in the first control, the second spillback valve and the suction valve unloader based on the pressure acquired by the upstream side pressure sensor so as to adjust a processing amount of the cylinder unit.

5. The compressor unit according to claim 1 or 2, wherein
the adjustment means includes, in at least one subsequent compression stage among the one or two or more subsequent compression stages, a stepless capacity adjustment device having
a suction valve unloader attached to a cylinder unit of the subsequent compression stage, and
a drive device that is of a hydraulic type or an electric type and opens and closes the suction valve unloader, and
the controller
drives the drive device so as to adjust a timing of operation of the suction valve unloader in conjunction with rotational motion of a crankshaft in the crank mechanism, and
is configured to control, in the first control, the drive device based on a pressure acquired by the upstream side pressure sensor so as to adjust a processing amount of the subsequent compression stage.

6. A method for controlling a compressor unit, the compressor unit being a reciprocating compressor unit, recovering hydrogen gas, that is boil-off gas from a liquid hydrogen storage tank, and supplying at least a part of the hydrogen gas to a demand destination including at least one of an engine, a power generation facility, and a boiler, the compressor unit including
one or two or more early compression stages that compress hydrogen gas having a temperature below 0°C and flowing in a suction flow path,
one or two or more subsequent compression stages that further compress hydrogen gas discharged from the early compression stage,
a crank mechanism that drives the early compression stage and the subsequent compression stage,
a first spillback unit including a first spillback flow path and a first spillback valve, the first spillback flow path being for returning hydrogen gas after being discharged from the early compression stage to the suction flow path, and the first spillback valve being for adjusting a spillback amount in the first spillback flow path,
an adjustment means for adjusting a processing amount of hydrogen gas processed by the subsequent compression stage,
a pressure sensor disposed on an intermediate flow path between the early compression stage and the subsequent compression stage, and
an upstream side pressure sensor disposed on the suction flow path,
each of the early compression stage and the subsequent compression stage includes
a cylinder unit,
a piston,
a piston rod connecting the piston to the crank mechanism, and
a rod packing that seals between the piston rod and the cylinder unit,
the early compression stage is of an air cooled and oil free type, and
the method for controlling the compressor unit comprising:
acquiring pressure of hydrogen gas flowing in the suction flow path by the upstream side pressure sensor;
acquiring pressure of hydrogen gas flowing in the intermediate flow path by the pressure sensor;
executing a first control of controlling the adjustment means so as to adjust a processing amount of the subsequent compression stage based on pressure acquired by the upstream side pressure sensor; and
referring to intermediate pressure acquired by the pressure sensor and executing a second control of controlling the first spillback valve before or after or simultaneous with the first control so as to bring the intermediate pressure within a predetermined pressure range.
